# FASCICULE DE BREVET EUROPEEN

(11) **EP 2 403 239 B1**
(45) Date de publication et mention de la délivrance du brevet: **16.09.2015**
(21) Numéro de dépôt: 11165700.3
(22) Date de dépôt: 11.05.2011
(51) Int. Cl.: H04N 5/45, H04N 5/445

(54) **Procédé d'affichage de contenus audiovisuels adaptés et serveur correspondant**
Anzeigeverfahren von angepassten audiovisuellen Inhalten, sowie entsprechender Server
Method for displaying adapted audiovisual contents and corresponding server

(30) Priorité: 30.06.2010 FR 1002757
(43) Date de publication de la demande: 04.01.2012
(73) Titulaire: ALCATEL LUCENT, 92100 Boulogne-Billancourt (FR)
(72) Inventeur: Pergament, David, 91620 NOZAY (FR); Toms, Yann, 91620 NOZAY (FR); Senot, Christophe, 90620 NOZAY (FR); Betge-Brezetz, Stéphane, 91620 NOZAY (FR)

(56) Documents cités:
- WO-A1-2008/152303
- US-A1- 2008 115 168
- US-A1- 2010 115 554

## Description

L'invention concerne un procédé d'affichage de contenus audiovisuels adaptés à au moins un utilisateur. Elle concerne également un serveur correspondant.

Actuellement dans l'audiovisuel, la multiplication des chaînes et services a pour effet d'offrir à l'utilisateur un choix de plus en plus important parmi de nombreux flux de contenus de programmes audiovisuels à regarder.

Il arrive fréquemment qu'un utilisateur se trouve intéressé par plus d'un programme à la fois, par exemple il peut être intéressé par un match de football et une série télévisée diffusés en même temps. L'utilisateur peut soit décider de ne regarder qu'un seul des programmes qui l'intéresse ou alors il peut être tenté de basculer constamment entre tous les programmes qu'il souhaite regarder, ne lui permettant pas en définitive de profiter de ces programmes.

Il convient donc de trouver des solutions permettant de diminuer la frustration de l'utilisateur face à cette situation.

D'autre part, les téléviseurs à grand écran sont maintenant largement développés. La plupart de ces grands écrans bénéficient de capacités d'affichage multiple avec plusieurs fenêtres d'affichage, par exemple pour l'affichage d'une mosaïque de programmes comme le décrit notamment le document US 2010/0115554, ou encore l'affichage d'une image principale contenant une image secondaire plus petite ou deux images côte à côte selon la technologie PIP pour "Picture in Picture" en anglais. On connaît par exemple du document US 2010/0115554 une solution permettant à un utilisateur donné de suivre plusieurs programmes par exemple sportifs à l'aide d'un affichage multiple sur l'écran. Ces programmes ne concernent qu'une catégorie de programmes, par exemple les événements sportifs, et sont sélectionnés à partir des préférences enregistrées de cet utilisateur.

Toutefois, la plupart du temps, les téléspectateurs ne sont pas seuls devant leur écran mais en groupe. Il s'agit là plus d'un divertissement social avec la famille ou entre amis.

Dans le cas d'un groupe de téléspectateurs, le choix du programme est encore plus compliqué selon les préférences des différents membres.

Le problème est alors d'être en mesure d'offrir de façon automatique une mosaïque de programmes satisfaisant l'utilisateur ou le groupe d'utilisateurs qui est ou sont assis devant le téléviseur.

À cet effet, l'invention a pour objet un procédé d'affichage de contenus audiovisuels adaptés à au moins un utilisateur sur un moyen d'affichage d'un terminal comprenant un récepteur de contenus audiovisuels, ledit procédé comprenant les étapes suivantes :
- on identifie au moins un profil d'utilisateur associé audit au moins un utilisateur parmi un ensemble de profils d'utilisateurs mémorisés,
- on détermine parmi les contenus audiovisuels reçus, des contenus audiovisuels susceptibles d'intéresser ledit au moins un utilisateur à partir dudit au moins un profil d'utilisateur identifié,
- on définit à partir dudit au moins un profil d'utilisateur identifié quels contenus audiovisuels susceptibles d'intéresser ledit au moins un utilisateur peuvent être affichés en même temps dans une même fenêtre d'affichage,
- on construit une mosaïque de contenus audiovisuels avec une pluralité de fenêtres dont au moins une fenêtre est une fenêtre d'affichage multiple de contenus audiovisuels susceptibles d'intéresser ledit au moins un utilisateur et pouvant être affichés en même temps dans une même fenêtre d'affichage, et
- on affiche ladite mosaïque construite.

Le procédé permet donc de proposer un affichage multi-fenêtres dont une fenêtre peut présenter un contenu audiovisuel ou une sous-mosaïque de contenus audiovisuels.

De plus, ces contenus audiovisuels à regarder dans un affichage simple ou multiple sont sélectionnés en fonction des préférences de l'ensemble des utilisateurs devant le téléviseur.

Ainsi, un ou plusieurs utilisateurs peuvent choisir à partir de la mosaïque proposée de regarder un même programme ou alors plusieurs programmes en même temps.

Ledit procédé d'affichage peut comporter en outre une ou plusieurs des caractéristiques suivantes, seules ou en combinaison :
- les contenus audiovisuels sont associés à des informations descriptives, et l'étape de détermination des contenus audiovisuels susceptibles d'intéresser ledit au moins un utilisateur comprend les sous-étapes suivantes :
   - on extrait les informations descriptives des contenus audiovisuels,
   - on analyse les informations descriptives extraites en corrélation avec ledit au moins un profil d'utilisateur identifié, de façon à détecter des concordances entre des informations descriptives extraites et des préférences dudit au moins un utilisateur spécifiées dans ledit au moins un profil d'utilisateur identifié, et
   - on identifie les contenus audiovisuels dont les informations descriptives concordent avec des préférences dudit au moins un utilisateur comme contenus audiovisuels susceptibles d'intéresser ledit au moins un utilisateur,
- les informations descriptives sont des métadonnées,
- les informations descriptives comportent au moins une donnée du groupe de données comportant : un titre, un résumé, des commentaires, des données complémentaires provenant de sites web,
- les informations descriptives sont accessibles à partir d'un guide de programme électronique,
- pour ladite fenêtre d'affichage multiple, on construit une image principale comprenant au moins une image secondaire à l'intérieur de l'image principale selon la technologie PIP « Picture In Picture »,
- pour ladite fenêtre d'affichage multiple, on construit une sous-mosaïque de contenus audiovisuels,
- on élabore une liste de contenus audiovisuels susceptibles d'intéresser ledit au moins un utilisateur, hiérarchisée selon des niveaux d'intérêt dudit au moins un utilisateur à partir dudit profil d'utilisateur identifié, et telle qu'un élément de ladite liste soit exprimé selon un format présentant au moins un flux vidéo et un flux audio,
- on élabore par utilisateur une liste individuelle de contenus audiovisuels susceptibles d'intéresser l'utilisateur, et pour plusieurs utilisateurs, on élabore une liste commune de contenus audiovisuels susceptibles d'intéresser les utilisateurs, à partir des listes individuelles,
- ledit procédé d'affichage comprend les étapes suivantes :
   - on reçoit une requête d'affichage d'une autre mosaïque,
   - on détermine d'autres contenus audiovisuels susceptibles d'intéresser ledit au moins un utilisateur à partir dudit profil d'utilisateur identifié,
   - on analyse les compatibilités d'affichage simultané,
   - on construit une autre mosaïque de contenus audiovisuels avec une pluralité de fenêtres dont au moins une fenêtre est une fenêtre d'affichage multiple, et
   - on affiche l'autre mosaïque construite,
- ledit procédé d'affichage comprend les étapes suivantes : on sélectionne une fenêtre de ladite mosaïque, et on affiche sur le moyen d'affichage dudit terminal la fenêtre sélectionnée,
- on mémorise la fenêtre sélectionnée par ledit au moins un utilisateur de manière à pouvoir utiliser cette information lors d'une détermination ultérieure de contenus audiovisuels susceptibles d'intéresser au moins un utilisateur,
- on mémorise au moins un paramètre contextuel parmi au moins la saison, la date, le jour de la semaine, l'heure, un thème associé aux contenus audiovisuels de la fenêtre sélectionnée,
- on associe un flux audio à des contenus audiovisuels affichés en même temps sur le moyen d'affichage, le flux audio étant choisi à partir dudit au moins un profil d'utilisateur identifié,
- le flux audio choisi est le flux audio d'un des contenus audiovisuels affichés,
- le flux audio choisi est un flux audio distinct des contenus audiovisuels affichés,
- lorsque plusieurs contenus audiovisuels sont affichés en même temps, on surveille la fin de diffusion d'un contenu audiovisuel affiché, et lorsque la diffusion d'un contenu audiovisuel se termine, on adapte l'affichage,
- on remplace ledit contenu audiovisuel terminé par un autre contenu audiovisuel susceptible d'intéresser ledit au moins un utilisateur,
- on remplace l'ensemble des contenus audiovisuels affichés en même temps par des contenus audiovisuels susceptibles d'intéresser ledit au moins un utilisateur,
- ledit procédé d'affichage comprend les étapes suivantes :
   - parmi des contenus audiovisuels diffusés ultérieurement, on détecte des contenus audiovisuels susceptibles d'intéresser ledit au moins un utilisateur, et
   - on adapte l'affichage lorsque la diffusion de ces contenus audiovisuels détectés commence,
- ledit procédé d'affichage comprend les étapes suivantes :
   - lorsque plusieurs contenus audiovisuels sont affichés en même temps, on analyse les contenus audiovisuels affichés selon des règles d'analyse données de manière à détecter un événement prédéfini dans ledit contenu audiovisuel analysé, tel qu'un but inscrit lors d'un match de sport, et
   - on met en évidence ledit contenu audiovisuel dans lequel un événement prédéfini est détecté,
- on analyse le flux audio d'un contenu audiovisuel affiché de façon à détecter des récurrences de mots-clés prédéterminés associés audit événement prédéfini,
- on analyse le flux audio d'un contenu audiovisuel affiché de façon à détecter une modification importante de l'environnement sonore, tel qu'un emballement d'une foule de spectateurs ou d'un commentateur par exemple pour un match sportif,
- on analyse le flux vidéo d'un contenu audiovisuel affiché de façon à détecter une compacité dans une partie de l'image, tel que des joueurs dans la zone de réparation pour un match de foot,
- on modifie l'affichage dudit contenu audiovisuel dans lequel un événement prédéfini est détecté pour mettre en évidence ledit contenu audiovisuel,
- on modifie l'affichage dudit contenu audiovisuel selon au moins une modification suivante : un agrandissement de l'affichage, une mise en surbrillance, un transfert vers une fenêtre d'affichage principale du moyen d'affichage,
- on lit le flux audio dudit contenu audiovisuel dans lequel un événement prédéfini est détecté pour mettre en évidence ledit contenu audiovisuel.

L'invention concerne également un serveur correspondant, caractérisé en ce qu'il comporte une base de données de profils d'utilisateurs d'un terminal pour afficher des contenus audiovisuels et au moins un moyen de traitement pour :
- identifier un profil d'utilisateur associé à au moins un utilisateur dudit terminal,
- déterminer parmi des contenus audiovisuels, des contenus audiovisuels susceptibles d'intéresser ledit au moins un utilisateur à partir dudit profil d'utilisateur identifié,
- analyser les compatibilités d'affichage simultané de contenus audiovisuels susceptibles d'intéresser ledit au moins un utilisateur à partir dudit profil d'utilisateur identifié,
- construire une mosaïque de contenus audiovisuels avec une pluralité de fenêtres dont au moins une fenêtre est une fenêtre d'affichage multiple de contenus audiovisuels susceptibles d'intéresser ledit au moins un utilisateur et présentant des compatibilités d'affichage simultané, et
- afficher ladite mosaïque construite sur le terminal.

Ledit serveur peut comporter en outre une ou plusieurs des caractéristiques suivantes, seules ou en combinaison :
- un profil d'utilisateur comprend au moins une donnée du groupe de données comportant : des données d'identification dudit utilisateur, des loisirs, des préférences de contenus audiovisuels à visionner, des thèmes préférés, des catégories de film préférées, des informations sur le comportement antérieur dudit utilisateur associé lors de la mise en oeuvre dudit procédé d'affichage tel que défini ci-dessus, des préférences d'affichage exclusif ou combiné de contenus audiovisuels, des préférences de sources audio lorsque des contenus audiovisuels sont affichés en même temps,
- ledit serveur comporte un module d'adaptation de l'affichage multiple de contenus audiovisuels sur le terminal.

D'autres caractéristiques et avantages de l'invention ressortiront de la description suivante, donnée à titre d'exemple, sans caractère limitatif, en regard des dessins annexés sur lesquels :
- la figure 1a représente un terminal sur lequel est affichée une mosaïque de contenus audiovisuels et de combinaisons de contenus audiovisuels,
- la figure 1b est une vue zoomée de l'affichage sur le terminal de la figure 1a,
- la figure 2 illustre de façon schématique des moyens de traitement d'un serveur pour la construction et l'affichage sur le terminal de la figure la ou 1b d'une mosaïque de contenus audiovisuels,
- la figure 3 représente de façon simplifiée des préférences enregistrées dans des profils d'utilisateurs,
- la figure 4 illustre les différentes étapes d'un procédé d'affichage, et
- la figure 5 illustre de façon schématique et simplifiée un exemple de listes de contenus audiovisuels adaptés selon trois options d'affichage à proposer à un ou plusieurs utilisateurs selon l'affichage du terminal de la figure 1a ou 1b.

Sur ces figures et dans la suite de la description, les éléments identiques sont identifiés par les mêmes numéros de référence.

L'invention concerne la génération automatique d'une mosaïque de contenus audiovisuels présentant dans ces fenêtres des contenus audiovisuels et des sous-mosaïques de contenus audiovisuels. Ces contenus audiovisuels sont des programmes télévisés tels que des films, des séries, le journal télévisé ou encore des transmissions de matchs.

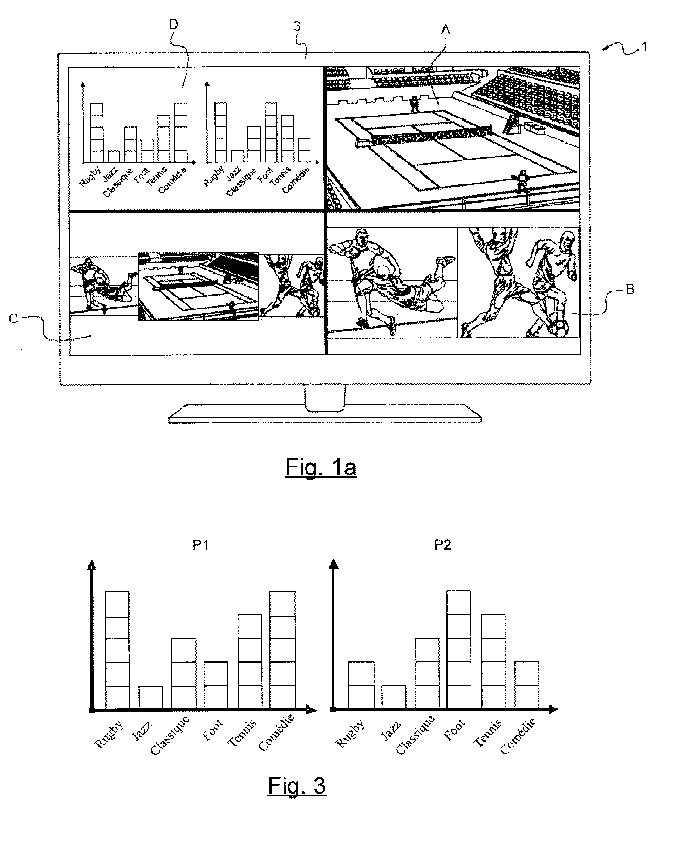

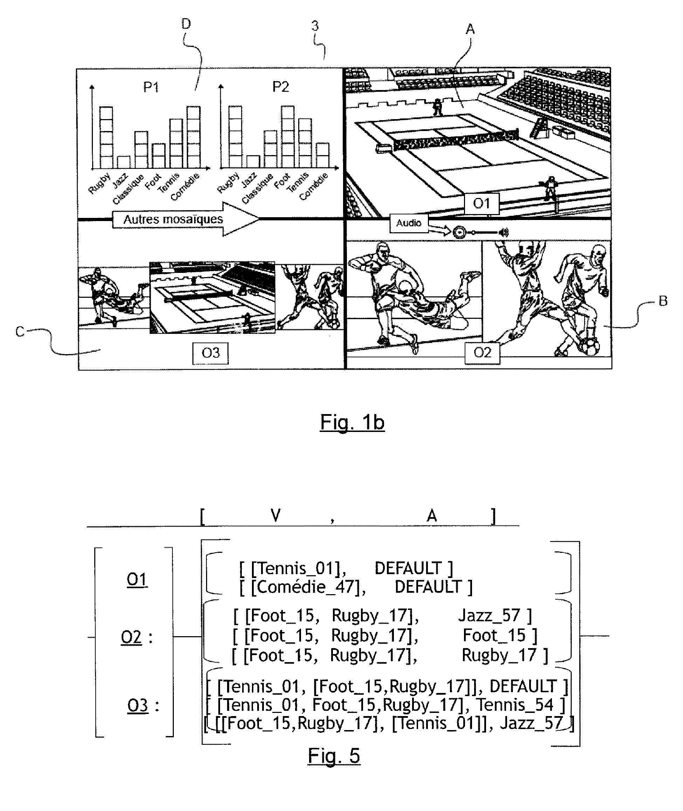

La figure 1a représente un terminal, ici un téléviseur 1 comprenant un récepteur de contenus audiovisuels et un moyen d'affichage, dans cet exemple un écran d'affichage 3 (dont l'affichage est agrandi sur la figure 1b) permettant d'afficher des contenus audiovisuels diffusés sur des canaux de diffusion par un serveur de contenus audiovisuels (non représenté).

On décrit premièrement les moyens de traitement d'un serveur permettant de proposer une mosaïque à un ou plusieurs utilisateurs en l'affichant sur le téléviseur 1 puis on détaillera par la suite les différentes étapes d'un procédé correspondant.

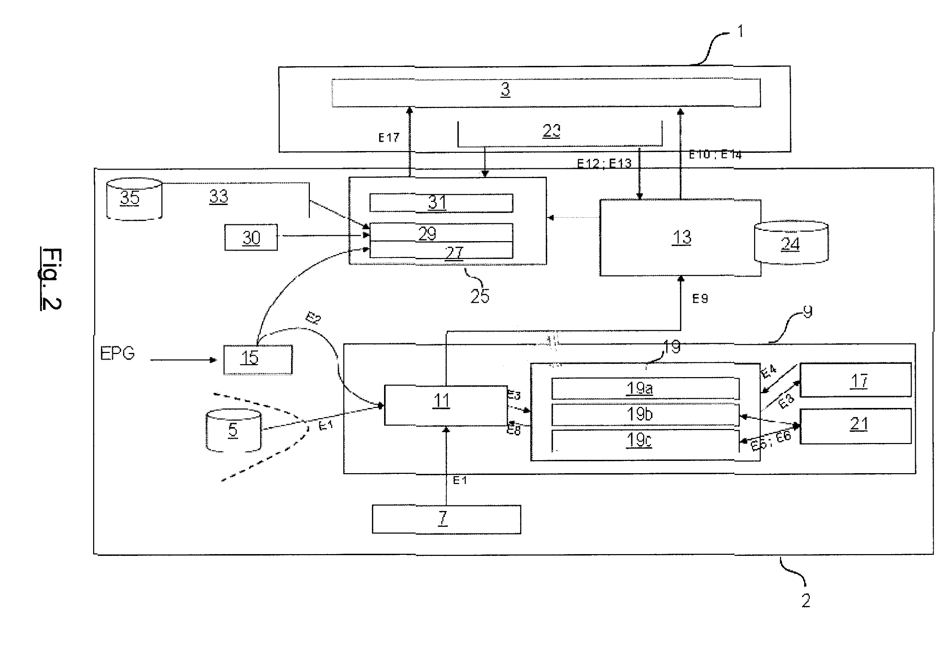

On a illustré de façon schématique sur la figure 2 un serveur 2 comportant des moyens de traitement, permettant comme l'illustrent les figures 1a et 1b, de proposer à un utilisateur ou à un groupe d'utilisateurs une mosaïque de contenus audiovisuels qui leur sont adaptés et dont certaines fenêtres présentent un affichage multiple de façon à proposer non pas seulement un contenu audiovisuel mais une combinaison de contenus audiovisuels à regarder en même temps.

Cette mosaïque comporte par exemple une fenêtre A avec un affichage simple d'un seul contenu audiovisuel, une fenêtre B d'affichage multiple avec deux contenus audiovisuels, et une fenêtre C d'affichage multiple avec trois contenus audiovisuels. Bien sûr, on peut également prévoir un affichage avec plus de deux ou trois contenus dans une même fenêtre. Cette mosaïque peut également afficher dans une autre fenêtre D des données autres que des contenus audiovisuels telles que des graphiques simplifiés de préférences enregistrées dans des profils d'utilisateurs (mieux visibles sur la figure 3) ou encore le guide de programme électronique, connu sous le sigle EPG pour l'anglais "Electronic Program Guide".

Afin de pouvoir proposer des contenus adaptés à des utilisateurs, le serveur 2 comporte une base de données 5 (figure 2) dans laquelle sont mémorisés les profils des utilisateurs. Un profil d'utilisateur peut comprendre : des données d'identification d'un utilisateur, des loisirs, des centres d'intérêt, des préférences de contenus audiovisuels à visionner, des thèmes préférés, des catégories de film préférées, des préférences d'affichage exclusif (un seul contenu audiovisuel) ou combiné (une sous-mosaïque ou une image dans une image) de contenus audiovisuels, des préférences de sources audio lorsque des contenus audiovisuels sont affichés en même temps, des préférences de taille d'affichage dans les affichages multiples.

À titre d'exemple, en se référant à la figure 3, pour deux utilisateurs de profils respectifs P1 et P2, ces profils d'utilisateurs P1,P2 expriment les niveaux d'intérêt d'un utilisateur parmi des matchs de rugby, foot, et tennis, et une comédie, ainsi que pour de la musique jazz ou classique.

En se référant à nouveau à la figure 2, un module de reconnaissance 7 permet d'identifier un ou plusieurs utilisateurs regardant le téléviseur 1.

Ce module de reconnaissance 7 peut comprendre un moyen de reconnaissance faciale du ou des utilisateurs en face du téléviseur 1, ou en variante un moyen d'échanges d'informations avec un module complémentaire à proximité tel qu'un téléphone mobile comprenant des données d'identification d'un utilisateur, ou encore en utilisant des radio-étiquettes communément appelées "RFID tags" en anglais où RFID est le sigle de "Radio Frequency Identification". On peut aussi prévoir que ce module de reconnaissance 7 comporte une interface de connexion via laquelle un utilisateur s'identifie pour se connecter.

Un module de détermination 9 permet de déterminer, en vue de la construction de la mosaïque, les contenus audiovisuels les plus adaptés par rapport aux profils d'utilisateurs associés aux utilisateurs identifiés par le module de reconnaissance 7, ainsi que leur combinaison possible dans un même affichage.

Le module de détermination 9 comprend par exemple un moyen de sélection 11 qui comporte des moyens pour :
- collecter différentes informations lui permettant de sélectionner les contenus audiovisuels et des combinaisons de contenus audiovisuels les plus pertinents pour les utilisateurs identifiés, et
- transmettre ces contenus sélectionnés, à un module de construction 13 de mosaïque pour construire les contenus audiovisuels et les combinaisons de contenus audiovisuels de la mosaïque, à savoir l'ensemble des fenêtres d'affichage de la mosaïque, et l'afficher la mosaïque construite sur l'écran 3 du téléviseur 1.

Plus précisément, le moyen de sélection 11 peut collecter d'une part les informations d'identification des utilisateurs devant le téléviseur 1 provenant du module de reconnaissance 7 et les profils d'utilisateurs associés mémorisés dans la base de données 5.

De plus, le moyen de sélection 11 peut interagir avec un moyen d'extraction 15 d'informations descriptives des contenus audiovisuels, telles que des métadonnées accessibles par exemple depuis le guide de programme électronique. Ces métadonnées peuvent comprendre par exemple un titre, un résumé, des commentaires ou encore des données complémentaires provenant de sites web.

Le moyen de sélection 11 collabore d'une part avec un moyen d'élaboration de listes individuelles 17 pour l'élaboration par utilisateur d'une liste individuelle de contenus audiovisuels pertinents déterminés à partir de son profil d'utilisateur, et hiérarchisée en fonction des niveaux d'intérêt de l'utilisateur. Les éléments du haut de la liste correspondent aux contenus audiovisuels les plus pertinents par rapport au profil d'utilisateur, c'est-à-dire présentant le plus de concordances par rapport aux préférences de l'utilisateur.

D'autre part, le moyen de sélection 11 collabore avec un moyen d'élaboration de listes de groupe 19 pour définir différentes options d'affichage et élaborer pour les options d'affichage une liste, également hiérarchisée, de contenus audiovisuels pertinents pour l'ensemble des utilisateurs identifiés déterminés à partir des listes individuelles et des profils d'utilisateurs associés.

Pour ce faire, le moyen de sélection 11 peut comporter des moyens de transmission de ces informations collectées des profils d'utilisateurs et des métadonnées des contenus audiovisuels au moyen d'élaboration de listes de groupe 19 comprenant à son tour des moyens de transmission de ces informations au moyen d'élaboration de listes individuelles 17.

À titre d'exemple, en se référant aux figures 1b et 2, le moyen d'élaboration de listes de groupe 19 peut comporter un premier moyen d'élaboration 19a pour une première option d'affichage O1 qui peut être un affichage simple avec un seul contenu audiovisuel dans une fenêtre de la mosaïque, comme dans la fenêtre A de la mosaïque affichée sur l'écran 3 du téléviseur 1. Une autre option d'affichage peut être un affichage multiple. Par exemple, comme l'illustre la fenêtre B de la mosaïque deux contenus audiovisuels peuvent être affichés côte à côte en même temps dans une même fenêtre (option d'affichage 02), dans ce cas un deuxième moyen d'élaboration 19b peut être prévu pour l'élaboration d'une liste pour cette option 02. On peut aussi prévoir d'afficher une image principale contenant une autre image. Et, selon une autre option d'affichage multiple 03, trois contenus audiovisuels sont affichés dans une même fenêtre C. Un troisième moyen d'élaboration 19c peut être prévu pour l'élaboration d'une liste pour cette option 03.

Concernant ces options d'affichage multiple 02,03, les moyens d'élaboration 19b,19c doivent collaborer avec un moyen de vérification 21 de compatibilités pour définir à partir des profils des utilisateurs identifiés quels contenus audiovisuels peuvent être affichés en même temps dans une même fenêtre ainsi qu'éventuellement la source audio à associer à cet affichage multiple selon les préférences définies dans les profils d'utilisateurs.

Le moyen d'élaboration de listes de groupe 19 comporte par ailleurs des moyens de transmission des listes élaborées pour les options d'affichage des fenêtres de la mosaïque au moyen de sélection 11 pour la sélection des contenus les plus pertinents pour l'ensemble des utilisateurs identifiés à afficher seuls ou en combinaison dans la mosaïque.

Par ailleurs, le téléviseur 1 comporte une interface de navigation 23 permettant à l'utilisateur ou aux utilisateurs regardant l'écran 3 du téléviseur 1 de faire une requête pour l'élaboration et l'affichage d'une nouvelle mosaïque de contenus audiovisuels et de combinaisons de contenus audiovisuels, par exemple en sélectionnant la flèche « Autres mosaïques » illustrée à titre d'exemple sur la figure 1b.

Cette interface de navigation 23 (figure 2) permet également aux utilisateurs de sélectionner une des fenêtres A à C (figures 1a,1b) de la mosaïque pour l'afficher en plein écran.

En se référant à nouveau à la figure 2, le serveur 2 peut également comprendre une base de données 24 dans laquelle sont stockées des informations sur des comportements antérieurs des utilisateurs suite à l'affichage d'une mosaïque de contenus audiovisuels et de combinaisons de contenus audiovisuels. Cette base de données 24 peut également comporter des paramètres contextuels liés à ces comportements antérieurs, tels que la saison, la date, le jour de la semaine, l'heure, un thème associé aux contenus audiovisuels de la fenêtre sélectionnée, ou des comportements en groupe. En effet, on peut envisager que les centres d'intérêt des utilisateurs varient au cours du temps et que donc la mosaïque proposée diffère selon le contexte.

Par ailleurs, un module d'adaptation 25 permet d'adapter régulièrement l'affichage multiple sur l'écran 3 du téléviseur 1 par exemple :
- lorsqu'un contenu audiovisuel se termine, ou
- lorsqu'un prochain contenu audiovisuel susceptible d'intéresser l'utilisateur ou les utilisateurs devant le téléviseur 1 va commencer, ou encore
- lorsqu'un événement particulier se produit tel qu'un but marqué par exemple dans un match de football ou encore l'arrivée d'un invité attendu dans une émission télévisée, ou bien
- lorsqu'un utilisateur n'est plus devant le téléviseur 1, ou
- lorsqu'un nouvel utilisateur est détecté devant le téléviseur 1.

À cet effet, le module d'adaptation 25 comporte par exemple un moyen d'analyse 27 des métadonnées en direct de façon à détecter la fin de diffusion d'un contenu audiovisuel ou encore pour l'analyse des métadonnées des contenus audiovisuels prochainement diffusés de façon à détecter un nouveau contenu audiovisuel susceptible d'intéresser le ou les utilisateurs. Ces métadonnées à analyser sont extraites par le moyen d'extraction 15.

Le module d'adaptation 25 peut encore comprendre en complément ou en alternative un moyen de détection 29 d'un événement particulier survenant dans un contenu audiovisuel.

À cet effet, on peut anticiper cet événement par exemple en analysant le flux audio d'un contenu audiovisuel de façon à détecter une modification importante de l'environnement sonore, tel qu'un emballement d'une foule de spectateurs ou d'un commentateur par exemple pour un match sportif, ou encore en analysant le flux vidéo d'un contenu audiovisuel affiché de façon à détecter une compacité par exemple des joueurs lors d'un match de foot dans une partie de l'image, telle que la zone de réparation pour anticiper un but éventuel.

Il peut s'agir aussi par exemple d'un moyen d'analyse des flux audio des contenus audiovisuels pour détecter des récurrences de mots-clés prédéfinis associés à un événement particulier. Par exemple, pour détecter un but inscrit dans un match de sport, on recherche des récurrences des mots-clés suivants : but, tir, score, et si ces mots sont détectés un nombre de fois prédéfini, on détermine qu'un but est ou a été marqué.

On peut également prévoir un système 30 permettant d'apprécier l'intérêt des utilisateurs regardant l'écran 3 du téléviseur 1 pour une zone d'affichage de l'écran 3 afin de mettre en valeur cette zone d'affichage. Ce système 30 comprend par exemple des moyens d'analyse du mouvement des yeux des utilisateurs, par exemple des moyens d'oculométrie, en anglais "Eye tracking", avec une caméra pour capturer des images des yeux de l'utilisateur, un récepteur des images capturées, et un moyen de traitement pour déterminer la direction du regard des utilisateurs et identifier ainsi la zone regardée.

Selon une autre alternative, on peut identifier un événement à postériori, par exemple en analysant les commentaires textuels sur des sites sportifs spécialisés, ou encore en analysant le flux audio de manière à détecter des mots clés prédéterminés associés à l'événement prédéfini, ainsi que la piste vidéo via une analyse d'images à la recherche de pattern caractéristique de l'événement. Cela permet de reconstruire des fenêtres d'affichage multiple pertinentes dynamiquement.

De plus, le module d'adaptation 25 peut comporter un moyen de gestion 31 de l'adaptation de l'affichage pour par exemple remplacer un ou plusieurs contenus audiovisuels se terminant ou mettre en valeur un contenu audiovisuel dans lequel un événement survient par exemple en agrandissant l'affichage de ce contenu, en mettant en surbrillance ce contenu, ou en faisant un transfert de l'affichage de ce contenu vers une fenêtre d'affichage principale.

Un module de gestion de décalage temporel 33 permet d'enregistrer les contenus audiovisuels en cours d'affichage dans une mémoire locale 35 temporaire pour reprendre la diffusion une fois la modification apportée à l'affichage évitant ainsi aux utilisateurs de manquer une action ou intervention intéressante survenue pendant la modification de l'affichage.

On décrit maintenant les étapes d'un procédé d'affichage permettant de proposer à un ou plusieurs utilisateurs une mosaïque de contenus audiovisuels et de combinaisons de contenus audiovisuels dont les fenêtres affichent des contenus adaptés seuls ou combinés avec d'autres contenus pour un affichage multiple.

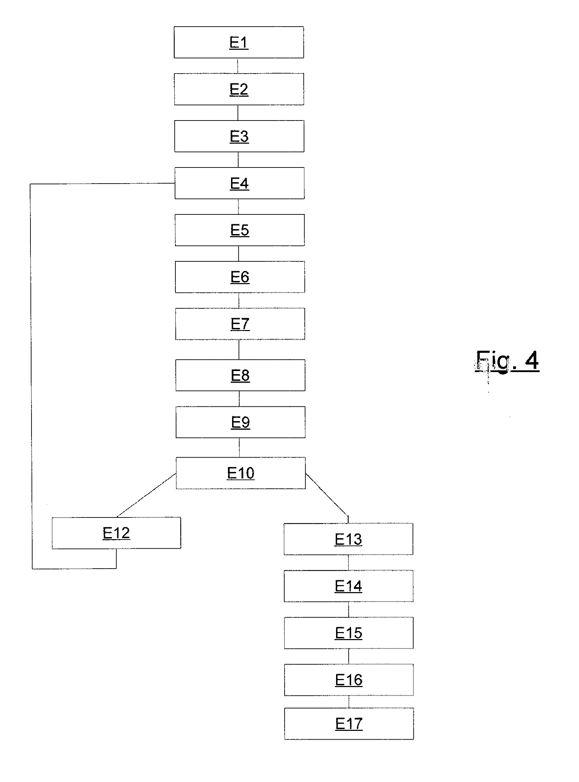

En référence aux figures 2 et 4, lorsqu'un ou plusieurs utilisateurs du téléviseur 1 sont reconnus par un module de reconnaissance 7 tel que décrit précédemment, on transmet lors d'une première étape E1 ces informations de reconnaissance d'un ou plusieurs utilisateurs par exemple au moyen de sélection 11 qui identifie le ou les profils d'utilisateurs associés mémorisés dans la base de données 5.

Ensuite, le module de détermination 19 détermine les contenus susceptibles d'intéresser les utilisateurs à partir de leurs profils d'utilisateurs identifiés.

Pour cela, le moyen d'extraction 15 par exemple extrait des informations descriptives, telles que des métadonnées, accessibles depuis l'EPG et les transmet au moyen de sélection 11 à l'étape E2.

Le moyen de sélection 11 collecte donc à la fois les informations d'identification des utilisateurs et les profils associés ainsi que les informations descriptives et les transmet à l'étape E3 au moyen d'élaboration de listes de groupe 19 qui les transmet également au moyen d'élaboration de listes individuelles 17.

Le moyen d'élaboration de listes individuelles 17 détermine à l'étape E4 pour un utilisateur les contenus les plus adaptés à partir des informations descriptives extraites par le moyen d'extraction 15 et du profil d'utilisateur associé et transmet au moyen d'élaboration de listes de groupe 19 une liste hiérarchisée des contenus audiovisuels susceptibles d'intéresser l'utilisateur.

Ainsi, en se référant également à la figure 3, à partir du profil d'utilisateur P1 du premier utilisateur, le moyen d'élaboration de listes individuelles 17 retourne que les préférences du premier utilisateur sont dans l'ordre décroissant pour :
- la comédie et le match de rugby avec un même niveau d'intérêt, puis
- le match de tennis.

De même à partir du profil d'utilisateur P2 du deuxième utilisateur, le moyen d'élaboration de listes individuelles 17 retourne que les préférences du deuxième utilisateur sont pour :
- le match de foot,
- le match de tennis, puis
- le match de rugby ou la comédie avec le même niveau d'intérêt.

Le moyen d'élaboration de listes de groupe 19 collecte donc des listes individuelles de contenus audiovisuels par utilisateur et élabore à partir de ces listes individuelles des listes de contenus audiovisuels adaptés pour l'ensemble des utilisateurs devant le téléviseur 1 selon différentes options d'affichage, simple ou multiple, par exemple pour les trois options d'affichage O1 à O3.

En se référant à nouveau à la figure 2, pour les options d'affichage multiple, le moyen d'élaboration de listes de groupe 19 transmet à l'étape E5 des informations des profils d'utilisateurs au moyen de vérification 21 qui vérifie les compatibilités de combinaison d'affichage des contenus audiovisuels pertinents à l'étape E6 à partir de ces informations des profils d'utilisateurs, plus précisément à partir des préférences d'exclusivité ou de combinaison de contenus, et des préférences relatives au flux audio.

À titre d'exemple :
- le premier utilisateur a indiqué dans son profil qu'il préfère voir une comédie avec un affichage simple c'est à dire exclusif sans combinaison avec un autre contenu audiovisuel et avec le flux audio de la comédie,
- des préférences par défaut définissent que pour un match de foot l'affichage vidéo est obligatoire mais que la lecture du flux audio associé n'est pas nécessaire, et
- le deuxième utilisateur a indiqué dans son profil que pour un match de foot l'affichage vidéo n'est pas nécessaire mais que la lecture du flux audio associé est obligatoire.

En conséquence, à partir de toutes ces informations le moyen de vérification 21 transmet au moyen d'élaboration de listes de groupe 19 des résultats d'analyse de compatibilités de combinaison d'affichage selon lesquels les matchs de foot, de rugby et de tennis peuvent être combinés pour un affichage multiple mais que la comédie ne peut être visionné que dans un affichage simple pour satisfaire aux préférences des deux utilisateurs identifiés.

À partir de toutes les informations collectées, le moyen d'élaboration de listes de groupe 19 détermine les contenus adaptés pour une option d'affichage à l'étape E7.

Prenons le cas de l'affichage simple O1 : le moyen d'élaboration 19a détermine que les contenus audiovisuels les plus susceptibles d'intéresser les deux utilisateurs identifiés sont le match de tennis puis la comédie ou le match de rugby.

En se référant à la figure 5, les éléments de cette liste se présentent par exemple sous un format à deux dimensions, avec en première dimension un flux vidéo V, et en deuxième dimension un flux audio A. Dans une dimension est indiqué le canal de diffusion du contenu ou une valeur par défaut « DEFAULT ». Dans les exemples donnés, les chiffres représentent de façon illustrative les canaux de diffusion.

En conséquence, pour l'affichage simple O1, il n'y a qu'un contenu associé au flux vidéo V, et le flux audio A est le flux audio par défaut pour un affichage simple à savoir le flux audio associé au contenu audiovisuel.

Prenons maintenant le cas de la deuxième option 02 pour laquelle deux matchs peuvent être combinés mais pas la comédie comme précisé précédemment. D'après le profil P1 le premier utilisateur préfère parmi les matchs le match de rugby et d'après le profil P2 le deuxième utilisateur préfère parmi les matchs le match de foot comme cela ressort des listes individuelles transmises par le moyen d'élaboration de listes individuelles 17.

Par conséquent, le moyen d'élaboration 19b détermine que les contenus à combiner sont les matchs de foot et de rugby pour cette deuxième option O2.

De plus, à partir des informations sur le flux audio à associer et des profils d'utilisateurs P1,P2, le moyen d'élaboration de listes de groupe 19 propose d'associer comme flux audio soit de la musique Jazz, soit le flux audio associé au match de foot, soit le flux audio associé au match de rugby.

Enfin, pour la troisième option 03, le moyen d'élaboration 19c suggère de combiner les matchs de foot, de rugby et de tennis puisque la comédie ne peut être visionnée que dans un affichage simple pour satisfaire aux préférences des deux utilisateurs identifiés.

Le moyen d'élaboration de listes de groupe 19 transmet ensuite à l'étape E8 ces listes élaborées à l'étape E7 pour les options d'affichage de la mosaïque au moyen de sélection 11.

Le moyen de sélection 11 sélectionne à l'étape suivante E9 les contenus les plus pertinents pour l'ensemble des utilisateurs identifiés, puis les transmet au module de construction 13 qui construit les fenêtres d'affichage multiple et éventuellement les fenêtres d'affichage simple, et qui les affiche sur l'écran 3 du téléviseur 1, c'est l'étape E10. On obtient ainsi l'affichage de la mosaïque telle qu'illustrée sur les figures 1a et 1b.

Une fois la mosaïque affichée, le ou les utilisateurs devant le téléviseur 1 peuvent faire une requête à l'étape E12 pour l'élaboration et l'affichage d'une nouvelle mosaïque de contenus audiovisuels via l'interface de navigation 23.

Dans ce cas, les étapes E4 à E10 sont répétées pour construire une nouvelle mosaïque et l'afficher sur l'écran 3 du téléviseur 1.

Le ou les utilisateurs identifiés peuvent au contraire sélectionner à l'étape E13 une des fenêtres A à C de la mosaïque pour l'afficher sur l'écran 3 à l'étape E14.

Lors d'une étape E15, on mémorise le choix du ou des utilisateurs, par exemple dans la base de données 24, face à la mosaïque proposée ainsi que la fenêtre sélectionnée et éventuellement des paramètres contextuels associés. Ces informations pourront servir de base pour une sélection ultérieure de contenus audiovisuels ou de combinaisons de contenus audiovisuels à afficher dans une mosaïque. Plus précisément, on pourra utiliser soit les informations de comportements antérieurs de l'ensemble des utilisateurs ou alors uniquement concernant les comportements antérieurs des utilisateurs d'un groupe d'utilisateurs identifiés.

Par ailleurs, si on détecte à l'étape E16 un changement comme lorsqu'un contenu audiovisuel se termine ou lorsqu'un prochain contenu audiovisuel susceptible d'intéresser l'utilisateur ou les utilisateurs va commencer, ou encore lorsqu'un événement particulier se produit dans un contenu audiovisuel, ou bien le départ d'un utilisateur identifié ou l'arrivée d'un nouvel utilisateur, on adapte l'affichage sur l'écran 3 du téléviseur 1 à l'étape E17, soit en mettant en valeur un contenu audiovisuel, soit en remplaçant un contenu par un autre, ou encore en modifiant tout l'affichage par exemple en reconstruisant l'affichage avec un ou plusieurs nouveaux contenus audiovisuels.

Bien entendu, l'ordre de certaines étapes de ce procédé peut être interverti.

Ainsi, on propose des contenus audiovisuels qui sont adaptés aussi bien lorsqu'il y a un seul utilisateur que lorsqu'il y a un ensemble d'utilisateurs devant le téléviseur 1. Ces contenus sont adaptés à partir des profils de ces utilisateurs et peuvent concerner plusieurs catégories de contenus, et non pas seulement une catégorie comme les évènements sportifs.

De plus, avec cette solution on prend en compte les possibilités de combiner plusieurs contenus audiovisuels permettant aux utilisateurs identifiés de regarder en même temps plusieurs programmes télévisés, réduisant ainsi la possibilité d'un sentiment de frustration qui peut survenir lorsqu'on ne peut pas regarder un programme voulu.

## Revendications

1. Procédé d'affichage de contenus audiovisuels adaptés à au moins un utilisateur sur un moyen d'affichage (3) d'un terminal (1) comprenant un récepteur de contenus audiovisuels, ledit procédé comprenant les étapes suivantes :
- on identifie au moins un profil d'utilisateur associé audit au moins un utilisateur parmi un ensemble de profils d'utilisateurs mémorisés,
- on détermine parmi les contenus audiovisuels reçus, des contenus audiovisuels susceptibles d'intéresser ledit au moins un utilisateur à partir dudit au moins un profil d'utilisateur identifié,
**caractérisé en ce que** ledit procédé comprend en outre les étapes suivantes :
- on définit à partir dudit au moins un profil d'utilisateur identifié , d'une part, quels contenus audiovisuels sont susceptibles d'intéresser ledit au moins un utilisateur et d'autre part, les options d'affichage en même temps dans une même fenêtre d'affichage (B, C) de ces contenus audiovisuels susceptibles d'intéresser ledit au moins un utilisateur,
- on construit une mosaïque de contenus audiovisuels avec une pluralité de fenêtres (A,B,C) dont au moins une fenêtre est une fenêtre (B,C) d'affichage multiple de contenus audiovisuels susceptibles d'intéresser ledit au moins un utilisateur et affichés en même temps dans une même fenêtre (B,C), et
- on affiche ladite mosaïque construite.

2. Procédé d'affichage selon la revendication 1, dans lequel les contenus audiovisuels sont associés à des informations descriptives, **caractérisé en ce que** l'étape de détermination des contenus audiovisuels susceptibles d'intéresser ledit au moins un utilisateur comprend les sous-étapes suivantes :
- on extrait les informations descriptives des contenus audiovisuels,
- on analyse les informations descriptives extraites en corrélation avec ledit profil d'utilisateur identifié, de façon à détecter des concordances entre des informations descriptives extraites et des préférences dudit au moins un utilisateur spécifiées dans ledit profil d'utilisateur identifié, et
- on identifie les contenus audiovisuels dont les informations descriptives concordent avec des préférences dudit au moins un utilisateur comme contenus audiovisuels susceptibles d'intéresser ledit au moins un utilisateur.

3. Procédé d'affichage selon la revendication 2, **caractérisé en ce que** les informations descriptives sont des métadonnées.

4. Procédé d'affichage selon l'une quelconque des revendications précédentes, **caractérisé en ce que** pour ladite fenêtre d'affichage multiple (B), on construit une image principale comprenant au moins une image secondaire à l'intérieur de l'image principale selon la technologie PIP « Picture In Picture ».

5. Procédé d'affichage selon l'une quelconque des revendications précédentes, **caractérisé en ce que** pour ladite fenêtre d'affichage multiple (C), on construit une sous-mosaïque de contenus audiovisuels.

6. Procédé d'affichage selon l'une quelconque des revendications précédentes, **caractérisé en ce qu'**on élabore une liste de contenus audiovisuels susceptibles d'intéresser ledit au moins un utilisateur, hiérarchisée selon des niveaux d'intérêt dudit au moins un utilisateur à partir dudit profil d'utilisateur identifié.

7. Procédé d'affichage selon la revendication 6, **caractérisé en ce que** :
- on élabore par utilisateur une liste individuelle de contenus audiovisuels susceptibles d'intéresser l'utilisateur, et
- pour plusieurs utilisateurs, on élabore une liste commune de contenus audiovisuels susceptibles d'intéresser les utilisateurs, à partir des listes individuelles.

8. Procédé d'affichage selon l'une quelconque des revendications 1 à 7, **caractérisé en ce qu'**il comprend les étapes suivantes :
- on reçoit une requête d'affichage d'une autre mosaïque,
- on détermine d'autres contenus audiovisuels susceptibles d'intéresser ledit au moins un utilisateur à partir dudit profil d'utilisateur identifié,
- on définit quels contenus audiovisuels peuvent être affichés en même temps dans une même fenêtre d'affichage,
- on construit une autre mosaïque de contenus audiovisuels avec une pluralité de fenêtres dont au moins une fenêtre est une fenêtre d'affichage multiple, et
- on affiche l'autre mosaïque construite.

9. Procédé d'affichage selon l'une quelconque des revendications précédentes, **caractérisé en ce qu'**il comprend les étapes suivantes :
- on sélectionne une fenêtre (A,B,C) de ladite mosaïque, et
- on affiche sur le moyen d'affichage (3) dudit terminal (1) l'affichage de la fenêtre sélectionnée (A,B,C).

10. Procédé d'affichage selon la revendication 9, **caractérisé en ce que** lorsque plusieurs contenus audiovisuels sont affichés en même temps, on analyse les métadonnées de façon à détecter la fin de diffusion d'un contenu audiovisuel affiché, et lorsque la diffusion d'un contenu audiovisuel se termine, on adapte l'affichage.

11. Procédé d'affichage selon l'une des revendications 9 ou 10, **caractérisé en ce qu'**il comprend les étapes suivantes :
- lorsque plusieurs contenus audiovisuels sont affichés en même temps, on analyse les contenus audiovisuels affichés selon des règles d'analyse données de manière à détecter un événement prédéfini dans ledit contenu audiovisuel analysé, tel qu'un but inscrit lors d'un match de sport, et
- on met en évidence ledit contenu audiovisuel dans lequel un événement prédéfini est détecté.

12. Serveur pour la mise en oeuvre d'un procédé d'affichage de contenus audiovisuels adaptés à au moins un utilisateur sur un moyen d'affichage (3) d'un terminal (1) comprenant un récepteur de contenus audiovisuels, ledit procédé comprenant les étapes suivantes :
- on identifie au moins un profil d'utilisateur associé audit au moins un utilisateur parmi un ensemble de profils d'utilisateurs mémorisés,
- on détermine parmi les contenus audiovisuels reçus, des contenus audiovisuels susceptibles d'intéresser ledit au moins un utilisateur à partir dudit au moins un profil d'utilisateur identifié,
- on définit à partir dudit au moins un profil d'utilisateur identifié , d'une part, quels contenus audiovisuels sont susceptibles d'intéresser ledit au moins un utilisateur et d'autre part, les options d'affichage en même temps dans une même fenêtre d'affichage (B, C) des ces contenus audiovisuels susceptibles d'intéresser ledit utilisateur,
- on construit une mosaïque de contenus audiovisuels avec une pluralité de fenêtres (A,B,C) dont au moins une fenêtre est une fenêtre (B,C) d'affichage multiple de contenus audiovisuels susceptibles d'intéresser ledit au moins un utilisateur et affichés en même temps dans une même fenêtre d'affichage (B,C), et
- on affiche ladite mosaïque construite,
**caractérisé en ce que** ledit serveur comporte une base de données (5) de profils d'utilisateurs d'un terminal pour afficher des contenus audiovisuels et au moins un moyen de traitement pour :
- identifier un profil d'utilisateur associé à au moins un utilisateur dudit terminal,
- déterminer parmi des contenus audiovisuels, des contenus audiovisuels susceptibles d'intéresser ledit au moins un utilisateur à partir dudit profil d'utilisateur identifié,
- définir à partir dudit profil d'utilisateur identifié, d'une part, quels contenus audiovisuels sont susceptibles d'intéresser ledit au moins un utilisateur et d'autre part, les options d'affichage en même temps dans une même fenêtre d'affichage (B, C) de ces contenus audiovisuels susceptibles d'intéresser ledit au moins un utilisateur ,
- construire une mosaïque de contenus audiovisuels avec une pluralité de fenêtres (A,B,C) dont au moins une fenêtre est une fenêtre d'affichage multiple (B,C) de contenus audiovisuels susceptibles d'intéresser ledit au moins un utilisateur et affichés en même temps dans une même fenêtre d'affichage (B,C), et
- afficher ladite mosaïque construite sur le terminal.

## Patentansprüche

1. Verfahren zum Anzeigen audiovisuellen Inhalte, die an mindestens einen Benutzer angepasst sind, auf einem Anzeigemittel (3) eines Endgeräts (1), das einen Empfänger audiovisueller Inhalte umfasst, wobei das besagte Verfahren die folgenden Schritte umfasst:
- Identifizieren mindestens eines Benutzerprofils, das mit dem besagten mindestens einen Benutzer assoziiert ist, aus einer Einheit gespeicherter Benutzerprofile,
- Bestimmen, unter den empfangenen audiovisuellen Inhalten, von audiovisuellen Inhalten, die den besagten mindestens einen Benutzer interessieren können, ausgehend von dem besagten mindestens einen identifizierten Benutzerprofil,
**dadurch gekennzeichnet**, das das besagte Verfahren außerdem die folgenden Schritte umfasst:
- Definieren ausgehend von dem besagten mindestens einen identifizierten Benutzerprofil einerseits, welche audiovisuellen Inhalte den besagten mindestens einen Benutzer interessieren können, und, andererseits, der Optionen gleichzeitiger Anzeige in ein und demselben Anzeigefenster (B, C) dieser audiovisuellen Inhalte, die den besagten mindestens einen Benutzer interessieren können,
- Aufbauen eines Mosaiks audiovisueller Inhalte mit einer Mehrzahl von Fenstern (A, B, C), von welchem mindestens ein Fenster ein mehrfaches Anzeigefenster (B, C) audiovisueller Inhalte, die den besagten mindestens einen Benutzer interessieren können, ist, und die gleichzeitig in ein und demselben Fenster (B, C) angezeigt werden, und
- Anzeigen des aufgebauten Mosaiks.

2. Anzeigeverfahren nach Anspruch 1, bei dem die audiovisuellen Inhalte mit beschreibenden Informationen assoziiert sind, **dadurch gekennzeichnet, dass** der Bestimmungsschritt der audiovisuellen Inhalte, die den besagten mindestens einen Benutzer interessieren können, die folgenden Unterschritte umfasst:
- Extrahieren der beschreibenden Informationen der audiovisuellen Inhalte,
- Analysieren der extrahierten beschreibenden Informationen in Korrelation mit dem besagten identifizierten Benutzerprofil derart, dass Übereinstimmung zwischen den extrahierten beschreibenden Informationen und Vorlieben des besagten mindestens einen Benutzers erfasst werden, die in dem besagten identifizierten Benutzerprofil spezifiziert sind, und
- Identifikation der audiovisuellen Inhalte, deren beschreibende Informationen mit Vorlieben des besagten mindestens einen Benutzers als audiovisuelle Inhalte, die den besagten mindestens einen Benutzer interessieren können, übereinstimmen.

3. Anzeigeverfahren nach Anspruch 2, **dadurch gekennzeichnet, dass** die beschreibenden Informationen Metadaten sind.

4. Anzeigeverfahren nach einem der vorhergehenden Ansprüche, **dadurch gekennzeichnet, dass** für das besagte mehrfache Anzeigefenster (B) ein Hauptbild aufgebaut wird, das mindestens ein Sekundärbild im Inneren des Hauptbilds gemäß der PIP- Technologie "Picture In Picture" umfasst.

5. Anzeigerrerfahren nach einem der vorhergehenden Ansprüche, **dadurch gekennzeichnet, dass** für das mehrfache Anzeigefenster (C) ein Untermosaik audiovisueller Inhalte aufgebaut wird.

6. Anzeigeverfahren nach einem der vorhergehenden Ansprüche, **dadurch gekennzeichnet, dass** eine Liste audiovisueller Inhalte, die den besagten mindestens einen Benutzer interessieren können, nach Interessensniveaus des besagten mindestens eines Benutzers gegliedert ausgehend von dem besagten identifizierten Benutzerprofil zusammengestellt wird.

7. Anzeigeverfahren nach Anspruch 6, **dadurch gekennzeichnet, dass**
- pro Benutzer eine individuelle Liste audiovisueller Inhalte, die den Benutzer interessieren können, zusammengestellt wird, und
- für mehrere Benutzer eine gemeinsame Liste audiovisueller Inhalte, die die Benutzer interessieren können, ausgehend von den individuellen Listen zusammengestellt wird.

8. Anzeigeverfahren nach einem der Ansprüche 1 bis 7, **dadurch gekennzeichnet, dass** es die folgenden Schritte umfasst:
- Empfang einer Anzeigeanfrage eines anderen Mosaiks,
- Bestimmen anderer audiovisueller Inhalte, die den besagten mindestens einen Benutzer interessieren können, ausgehend von dem besagten identifizierten Benutzerprofil,
- Definieren, welche audiovisuellen Inhalte gleichzeitig in ein und demselben Anzeigefenster angezeigt werden können,
- Aufbauen eines anderen Mosaiks audiovisueller Inhalte mit einer Mehrzahl von Fenstern, von welchen mindestens ein Fenster ein mehrfaches Anzeigefenster ist, und
- Anzeigen des anderen aufgebauten Mosaiks.

9. Anzeigeverfahren nach einem der vorhergehenden Ansprüche, **dadurch gekennzeichnet, dass** es die folgenden Schritte umfasst:
- Auswahl eines Fensters (A, B, C) des besagten Mosaiks und
- Anzeigen auf dem Anzeigemittel (3) des besagten Endgeräts (1) der Anzeige des ausgewählten Fensters (A, B, C).

10. Anzeigeverfahren nach Anspruch 9, **dadurch gekennzeichnet, dass**, wenn mehrere audiovisuellen Inhalte gleichzeitig angezeigt werden, die Metadaten derart analysiert werden, dass das Ausstrahlungsende eines angezeigten audiovisuellen Inhalts erfasst wird, und, wenn die Ausstrahlung eines audiovisuellen Inhalts endet, die Anzeige angepasst wird.

11. Anzeigeverfahren nach einem der Ansprüche 9 oder 10, **dadurch gekennzeichnet, dass** es die folgenden Schritte umfasst:
- wenn mehrere audiovisuelle Inhalte gleichzeitig angezeigt werden, Analyse der angezeigten audiovisuellen Inhalte gemäß den gegebenen Analyseregeln derart, dass ein vordefiniertes Ereignis in dem besagten analysierten audiovisuellen Inhalt erfasst wird, wie zum Beispiel ein Tor, das bei einer Sportbegegnung geschossen wird, und
- Aufzeigen des audiovisuellen Inhalts, in dem ein vordefiniertes Ereignis erfasst wird.

12. Server zur Umsetzung eines Anzeigeverfahrens audiovisueller Inhalte, die an mindestens einen Benutzer angepasst sind, auf einem Anzeigemittel (3) eines Endgeräts (1), das einen Empfänger audiovisueller Daten umfasst, wobei das besagte Verfahren die folgenden Schritte umfasst:
- Identifikation mindestens eines Benutzerprofils, das mit dem besagten mindestens einen Benutzer assoziiert ist, aus einer Einheit gespeicherter Benutzerprofile,
- Bestimmen unter den empfangenen audiovisuellen Inhalten der audiovisuellen Inhalte, die den besagten mindestens einen Benutzer interessieren können, ausgehend von dem besagten mindestens einen identifizierten Benutzerprofil,
- Definition ausgehend von dem besagten mindestens einen identifizierten Benutzerprofil einerseits, welche audiovisuellen Inhalte den besagten mindestens einen Benutzer interessieren können, und, andererseits, der C3ptianen gleichzeitiger Anzeige in ein und demselben Anzeigefenster (B, C) dieser audiovisuellen Inhalte, die den besagten Benutzer interessieren können,
- Aufbauen eines Mosaiks audiovisueller Inhalte mit einer Mehrzahl von Fenstern (A, B, C), von welchen mindestens ein Fenster ein mehrfaches Anzeigefenster (B, C) audiovisueller Inhalte, die den besagten mindestens einen Benutzer interessieren können, ist, und die gleichzeitig in ein und demselben Anzeigefenster (B, C) angezeigt werden, und
- Anzeigen des besagten aufgebauten Mosaiks,
**dadurch gekennzeichnet, dass** der besagte Server eine Datenbank (5) von Benutzerprofilen eines Endgeräts umfasst, um audiovisuelle Inhalte anzuzeigen, und mindestens ein Verarbeitungsmittel, um
- ein Benutzerprofil zu identifizieren, das mit mindestens einem Benutzer des besagten Endgeräts assoziiert ist,
- unter den audiovisuellen Inhalten audiovisuelle Inhalte, die den besagten mindestens einen Benutzer interessieren können, ausgehend von dem besagten identifizierten Benutzerprofil zu bestimmen,
- ausgehend von dem besagten identifizierten Benutzerprofil einerseits definieren, welche audiovisuellen Inhalte den besagten mindestens einen Benutzer interessieren können, und, andererseits, der Optionen gleichzeitiger Anzeige in ein und demselben Anzeigefenster (B, C) dieser audiovisuellen Inhalte, die den besagten mindestens einen Benutzer interessieren können,
- Aufbauen eines Mosaiks audiovisueller Inhalte mit einer Mehrzahl von Fenstern (A, B, C), von welchen mindestens ein Fenster ein mehrfaches Anzeigefenster (B, C) audiovisueller Inhalte, die den besagten mindestens einen Benutzer interessieren können, ist, und die gleichzeitig in ein und demselben Anzeigefenster (B, C) angezeigt werden, und
- Anzeigen des besagten aufgebauten Mosaiks auf dem Endgerät.

## Claims

1. A method of displaying audiovisual content adapted to at least one user on the means of display (3) of a terminal (1) comprising an audiovisual content receiver, said method comprising the following steps:
- at least one user profile associated with said at least one user is identified from among a set of saved user profiles,
- among the audiovisual content received, audiovisual content is determined that is likely to interest said at least one user based on said at least one identified user profile,
**characterized in that** said method further comprises the following steps:
- based on said at least one identified user profile, it is defined, first, what audiovisual content is likely to interest said at least one user, and second, the options for displaying at the same time in the same display window (B, C) that audiovisual content likely to interest said at least one user,
- a mosaic of audiovisual content is constructed with a plurality of windows (A, B, C) of which at least one window is a multiple display window (B, C) of audiovisual content that is likely to interest said at least one user and displayed at the same time in the same window (B, C), and
- said constructed mosaic window is displayed.

2. A method of displaying according to claim 1, wherein the audiovisual content is associated with descriptive information, characteristics in that the step of determining audiovisual content that is likely to interest said at least one user comprises the following substeps:
- the descriptive information is extracted from the audiovisual content,
- the extracted descriptive information is analysed in correlation with said user identified, so as to detect matches between extracted descriptive information and preferences of said at least one user specified in said identified user profile, and
- the audiovisual content is identified whose descriptive information matches the preferences of said at least one user as audiovisual content likely to interest said at least one user.

3. A method of displaying according to claim 2, **characterized in that** the descriptive information is metadata.

4. A method of displaying according to any one of the preceding claims, **characterized in that** for said multiple display window (B), a main image is constructed comprising at least one secondary image within the main image using PIP "Picture In Picture" technology.

5. A method of displaying according to any one of the preceding claims **characterized in that** for said multiple display window (C), a sub-mosaic of audiovisual content is constructed.

6. A method of displaying according to any one of the preceding claims, **characterized in that** a list of audiovisual content likely to interest said at least one user is created, ranked by the interest levels of said at least one user based on said identified user profile.

7. A method of displaying according to claim 6, **characterized in that**:
- for each user, an individual list of audiovisual content likely to interest the user is created, and
- for multiple users, a shared list of audiovisual content likely to interest the users is created based on individual lists.

8. A method of displaying according to claims 1 to 7, **characterized in that** it comprises the following steps:
- a request to display another mosaic is received,
- other audiovisual content is determined that is likely to interest said at least one user based on said identified user profile,
- it is defined what audiovisual content may be displayed at the same time in the same display window,
- another audiovisual content mosaic is constructed with a plurality of windows of which at least one window is a multiple display window, and
- the other mosaic constructed is displayed.

9. A method of displaying according to any one of the preceding claims, **characterized in that** it comprises the following steps:
- a window (A, B, C) of said mosaic is selected, and
- on the display means (3) of said terminal (1) the selected window (A, B, C) is displayed.

10. A method of displaying according to claim 9, **characterized in that** when multiple pieces of audiovisual content are displayed at the same time, the metadata is analysed in such a way as to detect the end of playing a piece of audiovisual content displayed, and when the playing of a piece of audiovisual content is done, the display is adapted.

11. A method of displaying according to claims 9 or 10, **characterized in that** it comprises the following steps:
- when multiple pieces of audiovisual content are displayed at the same time, the audiovisual content displayed is analysed based on data analysis rules so as to detect a predefined event in said analysed audiovisual content during a sporting event, and
- said audiovisual content is highlighted in which a predefined event has been detected.

12. A server for implementing a method of displaying audiovisual content adapted to at least one user on a means of display (3) of a terminal (1) comprising an audiovisual content receiver, said method comprising the following steps:
- at least one user profile associated with said at least one user is identified from among a set of saved user profiles,
- among the audiovisual content received, audiovisual content is determined that is likely to interest said at least one user based on said at least one identified user profile,
- based on said at least one identified user profile, it is defined, first, what audiovisual content is likely to interest said at least one user, and second, the options for displaying at the same time in the same display window (B, C) that audiovisual content likely to interest said at least one user,
- a mosaic of audiovisual content is constructed with a plurality of windows (A, B, C) of which at least one window is a multiple display window (B, C) of audiovisual content that is likely to interest said at least one user and displayed at the same time in the same display window (B, C), and
- said constructed mosaic window is displayed,
**characterized in that** said server comprises a database (5) of user profiles of a terminal for displaying audiovisual content and at least one means of processing for:
- identifying a user profile associated with said at least one user of said terminal,
- determining from among the audiovisual content, audiovisual content that is likely to interest said at least one user based on said at least one identified user profile,
- defining, based on said at least one identified user profile, first, what audiovisual content is likely to interest said at least one user, and second, the options for displaying at the same time in the same display window (B, C) that audiovisual content likely to interest said at least one user,
- constructing a mosaic of audiovisual content with a plurality of windows (A, B, C) of which at least one window is a multiple display window (B, C) of audiovisual content that is likely to interest said at least one user and displayed at the same time in the same display window (B, C), and
- displaying said constructed mosaic on the terminal.
